# EUROPÄISCHE PATENTSCHRIFT

(11) **EP 0 947 678 B1**
(45) Veröffentlichungstag und Bekanntmachung des Hinweises auf die Patenterteilung: **16.03.2005**
(21) Anmeldenummer: 99101794.8
(22) Anmeldetag: 16.02.1999
(51) Int. Cl.: F02B 27/02

(54) **Sauganlage**
Intake system
Système d'admission

(30) Priorität: 03.04.1998 DE 19814970
(43) Veröffentlichungstag der Anmeldung: 06.10.1999
(73) Patentinhaber: Dr.Ing. h.c.F. Porsche Aktiengesellschaft, 70435 Stuttgart (DE)
(72) Erfinder: Rutschmann, Erwin, 75233 Tiefenbronn (DE); Schweizer, Armin, 71254 Ditzingen (DE)

(56) Entgegenhaltungen:
- EP-A- 0 255 059
- US-A- 4 846 117
- PATENT ABSTRACTS OF JAPAN vol. 017, no. 263 (M-1415), 24. Mai 1993 (1993-05-24) & JP 05 001546 A (NISSAN MOTOR CO LTD), 8. Januar 1993 (1993-01-08)

## Beschreibung

Die Erfindung betrifft eine Sauganlage mit einer Vorrichtung zur Nutzung von Resonanzeffekten für eine Brennkraftmaschine nach dem Oberbegriff des Patentanspruchs 1.

Aus Patent Abstracts Of Japan vol. 017, No. 263 and JP 05 001546A geht ein Einlasssystem für eine Brennkraftmaschine hervor, bei der sowohl eine Einlasskanallänge, wie auch das Volumen in einem Sammelbehälter variabel sind, um einen Druckpulsationseffekt zu erzielen.

Die DE 36 33 929 C2 behandelt mehrere Möglichkeiten zur Erzielung von Resonanzeffekten für Brennkraftmaschinen. Dabei wird dargelegt, daß durch Abstimmung von Länge und Querschnitt einer Ansaugleitung auf die jeweilige Brennkraftmaschine das Drehmoment und die Leistung der letzteren optimierbar ist.

Die US-PS 4 846 117 zeigt eine Sauganlage mit einem Behälter, in dem ein Ringkanal vorgesehen ist. Über diesen Ringkanal werden gegenüberliegende Zylinderreihen mit Ansaugluft versorgt.

In der US-PS 5 408 962 wird eine Sauganlage beschrieben, deren Behälter an zwei längenvariable Zuleitungen angeschlossen ist. Mit dieser Ausführung wird im unteren und mittleren Drehzahlbereich eine Resonanzabstimmung erzielt.

Schließlich offenbart die EP 0 065 076 B1 ein Ansaugsystem, dessen eigene Frequenz kontinuierlich verstellbar ist, wodurch der Effekt der Resonanzaufladung über den gesamten Drehzahlbereich nutzbar ist.

Aufgabe der Erfindung ist es, eine bestimmte Sauganlage für eine Brennkraftmaschine zu schaffen, durch die über einen wesentlichen Drehzahlbereich eine Drehmomentoptimierung bewerkstelligt wird.

Erfindungsgemäß wird diese Aufgabe durch die Merkmale des Patentanspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß mit der Steuereinrichtung der Resonanzquerschnitt im Resonanzbehälter variierbar ist, dergestalt, daß sich Resonanzeffekte ergeben, die zur Verbesserung des Drehmomentverhaltens der Brennkraftmaschine führen. Die Steuereinrichtung läßt sich auf einfache Weise in das Steuergehäuse, das eine prismaförmige Grundform aufweist, integrieren. Dabei ist die Steuereinrichtung ein konstruktiv übersichtlich gestaltbares Bauteil, das sich durch Linearbewegung stufenlos zwischen einer ersten Endstellung und einer zweiten Endstellung bewegen läßt. In der ersten Endstellung der Steuereinrichtung bildet ihre Stegwandung mit einer ersten Stirnwandung des Resonanzbehälters einen Verbindungskanal, der bei niedriger Drehzahl der Brennkraftmaschine ein Resonanzrohr zwischen zwei Resonanzvolumina im Resonanzbehälter bildet, die den gegenüberliegenden Zylinderreihen vorgelagert sind.

Die Steuereinrichtung weist Schenkeiwandungen auf, die von Aufnahmen des Resonanzbehälters umgeben sind. Diese Aufnahmen bilden Verlängerungen des Resonanzbehälters und weisen einen rohrförmigen Querschnitt auf. Zwischen den Schenkelwandungen der Steuereinrichtung und den Aufnahmen des Resonanzbehälters sind Führungseinrichtungen vorgesehen.

An den Resonanzbehälter ist eine mit einem Luftfilter versehene Zuführungseinrichtung angeschlossen, die als einzige Zuleitung ausgebildet sein kann. In dieser Zuleitung ist eine Drosselklappe angeordnet.

Es besteht aber auch die Möglichkeit, die Zuführungseinrichtung als eine zwei getrennte Zuleitungen aufweisende Rohreinheit zu bilden, die in den Resonanzbehälter münden. Diesen Zuleitungen ist ein einziger Rohrabschnitt vorgeschaltet, in dem die Drosselklappe angeordnet ist. Bei dieser Ausführung ist im Verbindungskanal des Resonanzkörpers eine Sperrklappe angeordnet, wobei diese Sperrklappe im niedrigen Drehzahlbereich und bei in vollem Umfang eingefahrener Steuereinrichtung geschlossen ist. Diese Ausführung sichert gerade im niedrigen Drehzahlbereich einen zusätzlichen Drehmomentzuwachs. Die Steuereinrichtung wird mittels einer Stellvorrichtung betätigt, und zwar drehzahl- und/oder lastabhängig. Dabei umfaßt die Stellvorrichtung eine Schubstange, die mit der Steuervorrichtung verbunden ist. Die Schubstange wird mittels eines Elektromotors betätigt. Dieser wirkt über ein Schneckengetriebe mit der Schubstange zusammen.

In der Zeichnung werden Ausführungsbeispiele der Erfindung gezeigt, die nachstehend näher beschrieben sind. Es zeigen
- Fig. 1: Eine schematische Darstellung einer Brennkraftmaschine mit der erfindungsgemäßen Sauganlage,
- Fig. 2: eine Ansicht entsprechend Fig. 1,
- Fig. 3: einen Schnitt nach der Linie III-III der Fig. 1 in größerem Maßstab,
- Fig. 4: eine Schrägansicht von oben auf eine konkret ausgeführte Sauganlage gemäß der Erfindung,
- Fig. 5: eine Ansicht entsprechend der Fig. 1 mit einer anderen Ausführungsform,
- Fig. 6: eine Ansicht ensprechend Fig. 5,
- Fig. 7: ein Diagramm, mit dem die Leistungsfähigkeit der erfindungsgemäßen Sauganlage verdeutlicht wird.

Eine Brennkraftmaschine 1 umfaßt gegenüberliegende Zylinderreihen 2, 3, die in Boxer- oder V-Form zueinander angeordnet sind, und zwar mit Abstand zu einer Längsmittellinie LM dieser Maschine. Im Ausführungsbeispiel weist jede Zylinderreihe 2, 3 jeweils drei Zylinder 4, 5, 6 bzw. 7, 8, 9 auf. Zwischen den Zylinderreihen 2 und 3 ist eine Sauganlage 10 vorgesehen, die die Zylinder 4, 5, 6 und 7, 8, 9 mit Luft versorgt.

Die Sauganlage ist mit einer Vorrichtung 11 zur Nutzung von Resonanzeffekten ausgestattet, wie sie durch Helmholtz-Resonatoren - Bosch, kraftfahrtechnisches Taschenbuch, 22. Auflage, 1995, Seite 379 - erzielt werden.

Die Vorrichtung 11 umfaßt eine Steuereinrichtung 12, die im Inneraum eines aus Metall, Kunststoff oder dergleichen bestehenden Resonanzbehälters 13 der Sauganlage 10 angeordnet ist. Mit der Steuereinrichtung 12 ist der Resonanzquerschnitt im Resonanzbehälter 13 variierbar, wodurch eine definierte Drehmomentoptimierung der Brennkraftmaschine 1 erzielbar ist.

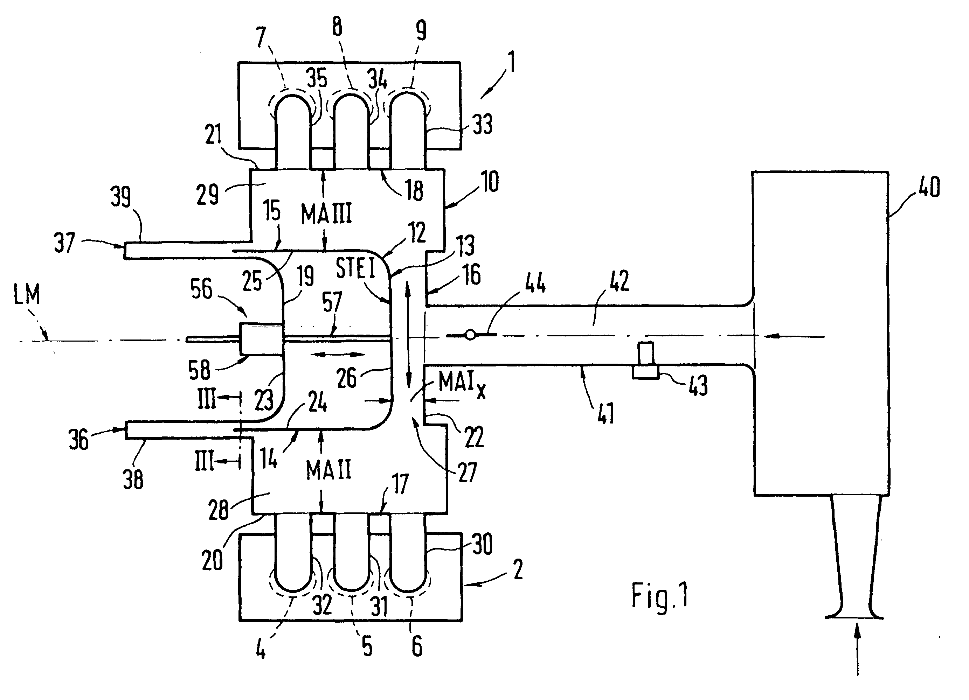

Die Steuereinrichtung 12, die ebenfalls aus Metall, Kunststoff oder dergleichen hergestellt sein kann, weist Leitwandungen 13, 14, 15 auf, die beabstandet - MA I_{X}, MA II und MA III (Fig. 1) - zu Wandungen 16, 17, 18, 19 des Resonanzbehälters 13 verlaufen.

Der Resonanzbehälter 13 weist eine prismaartige Grundform auf, wobei seine Wandungen 17, 18 als den Zylinderreihen 2 und 3 zugekehrte Längswandungen 20, 21 und eine als eine erste Stirnwand 22 sowie eine zweite Stirnwand 23 ausgebildet sind. Zu den Längswandungen 20, 21 bzw. Stirnwänden 22, 23 verlaufen die Leitwandungen 13, 14, 15 der Steuereinrichtung 12 gleichsinnig, vorzugsweise parallel.

Die Leitwandungen 13, 14, 15 weisen einen U-förmigen Verlauf auf, wobei Schenkelwandungen mit 24 und 25 und eine Stegwandung mit 26 bezeichnet sind.

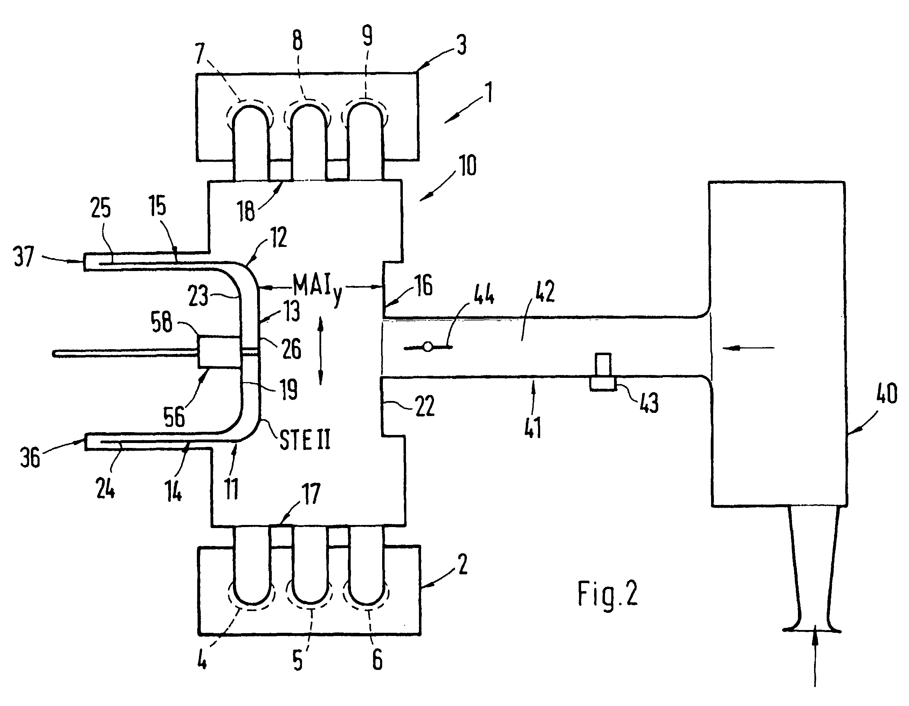

Die Steuereinrichtung 12 ist zwischen einer ersten Endstellung STE I - Fig. 1 - und einer zweiten Endstellung STE II - Fig. 2 - stufenlos verstellbar ausgeführt. Dabei bildet die Stegwandung 26 in der ersten Endstellung STE I zusammen mit der ersten Stirnwand 22 einen Verbindungskanal 27 (Fig. 1). Der Verbindungskanal 27 führt zu einem ersten Resonanzvolumen 28 und einem zweiten Resonanzvolumen 29, die den Zylinderreihen 2, 3 vorgelagert sind.

Der Resonanzbehälter 13 weist auf den den Zylinderreihen 2, 3 zugekehrten Seiten Rohrabschnitte 30, 31, 32 und 33, 34, 35 auf, die zu den Zylindern 4, 5, 6 und 7, 8, 9 führen. Diese relativ kurzen Rohrabschnitte sind Bestandteil des Resonanzbehälters 13.

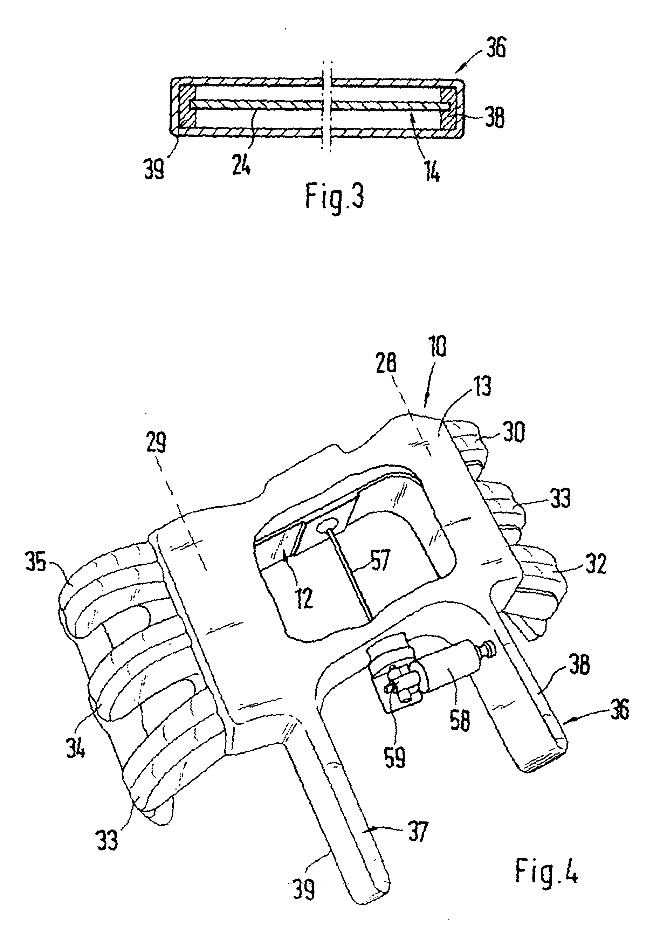

Die Schenkelwandungen 24, 25 der Steuereinrichtung 12 sind von Aufnahmen 36, 37 des Resonanzbehälters 13 umgeben. Diese Aufnahmen 36, 37 sind Verlängerungen 38, 39 des Resonanzbehälters 13 und weisen einen rohrförmigen Querschnitt - Fig. 3 - auf. Zwischen den Schenkelwandungen 24, 25 und den Aufnahmen 36, 37 sind Führungseinrichtungen 38, 39 vorgesehen, die im Ausführungsbeispiel fest mit den Aufnahmen 36, 37 verbunden sind.

Die erste Stirnwand 22 des Resonanzgehäuses 13 ist mit einer einen Luftfilter 40 umfassenden Zuführungseinrichtung 41 versehen. Diese Zuführungseinrichtung 41 ist eine einzige Zuleitung 42 dargestellt, in der ein Luftmassenmesser 43 und ein Drosselklappe 44 angeordnet ist. Die Drosselklappe 44 liegt näher beim Verbindungskanal 27 des Resonanzbehälters 13 als beim Luftfilter 40.

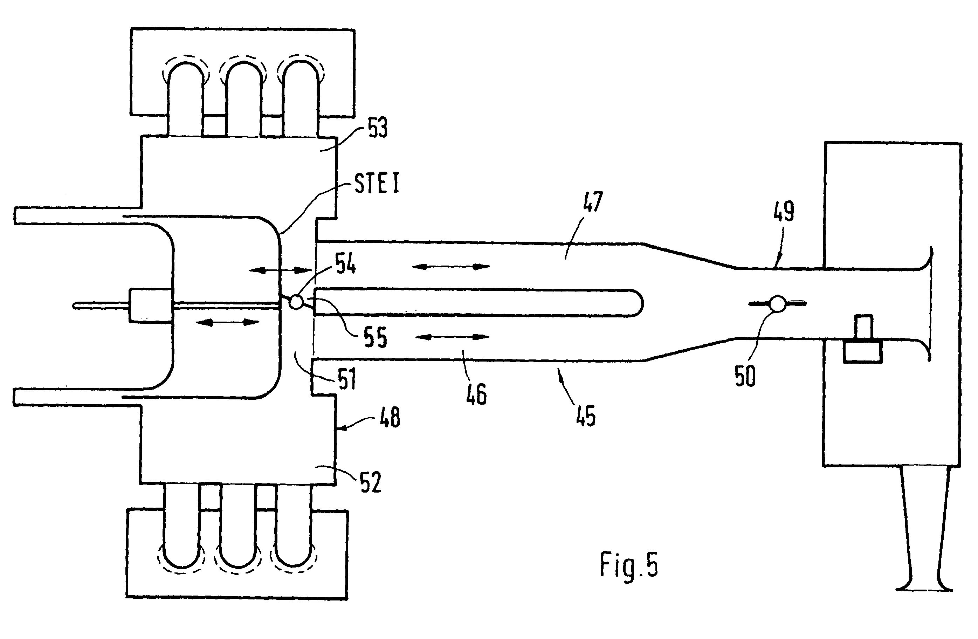

Gemäß Fig. 5 weist eine Zuführungseinrichtung 45 zwei abschnittsweise getrennte Zuleitungen 46, 47 auf, die in die erste Stirnwandung 47' des Resonanzbehälters 48 münden. Den Zuleitungen 46, 47 vorgeschaltet ist ein einziger Rohrabschnitt 49, der zusammen mit den besagten Zuleitungen eine hosenförmige Gestalt aufweist. In dem Rohrabschnitt 49 ist eine Drosselklappe 50 angeordnet.

Außerdem ist in dem Verbindungskanal 51 zwischen dem ersten Resonanzvolumen 52 und dem zweiten Resonanzvolumen 53 des Resonanzbehälters 48 eine Sperrklappe 54 vorgesehen, wodurch die Verbindung zwischen den Resonanzvolumina 52, 53 unterbrochen werden kann. Die Sperrklappe 54 ist in einem Bereich 55 zwischen den Zuleitungen 46, 47 angeordnet und wirkt im niedrigen Drehzahlbereich mit der Stegwandung 26 der Steuereinrichtung 12 zusammen.

Die Steuereinrichtung 12 ist mit einer Stelleinrichtung 56 betätigbar. Die Stelleinrichtung 56 umfaßt eine Hubstange 57 und einen Elektromotor 58. Die Hubstange 57 ist fest mit der Steuereinrichtung 12 verbunden, wogegen der Elektromotor 58 an der zweiten Stirnwand 23, jedoch außerhalb des Resonanzbehälters 13 angeordnet ist. Zwischen dem Elektromotor 58 und der Hubstange 57 ist ein Schneckengetriebe 59 vorgesehen. Anstelle dieses routierenden Elektromotors ist auch ein Linearmotor denkbar. Die Steuereinrichtung 12 arbeitet in Abhängigkeit von Parametern der Brennkraftmaschine, vorzugsweise Drehzahl und Last (Gaspedalstellung).

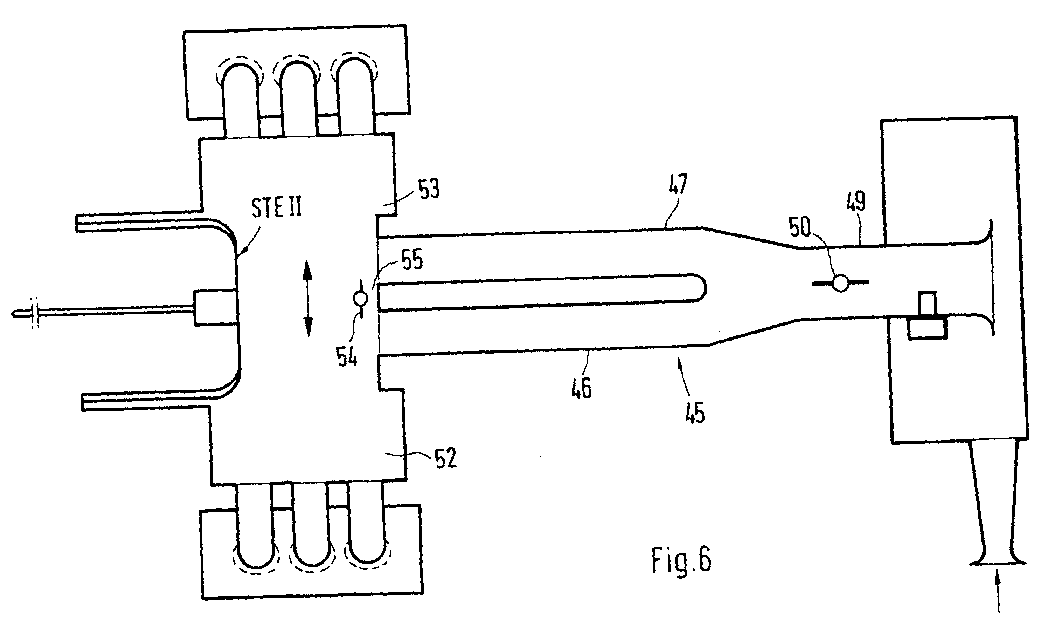

Die Wirkungsweise der Sauganlage läßt sich auf einfache Weise in Verbindung mit den Fig. 1, 2, 5, 6 und 7 erläutern. Beim Betrieb der Brennkraftmschine mit der Steuereinrichtung 12 nimmt im niedrigen Drehzahlbereich besagte Einrichtung die Endstellung STE I ein, wobei der Verbindungskanal 27 zwischen dem ersten Resonanzvolumen 28 und dem zweiten Resonanzvolumen als Resonanzrohr wirkt. Bei geöffneter Drosselklappe 44 wird die Steuereinrichtung 12 mit der Stelleinrichtung 54 drehzahl- und/oder lastabhängig in die Stellung STE II bewegt, wodurch sich die Drehmomentteilkurve DMTK 1 ergibt. Im weiteren Verlauf ergeben sich die Drehmomentteilkurven DMTK 2 bis DMTK 4.

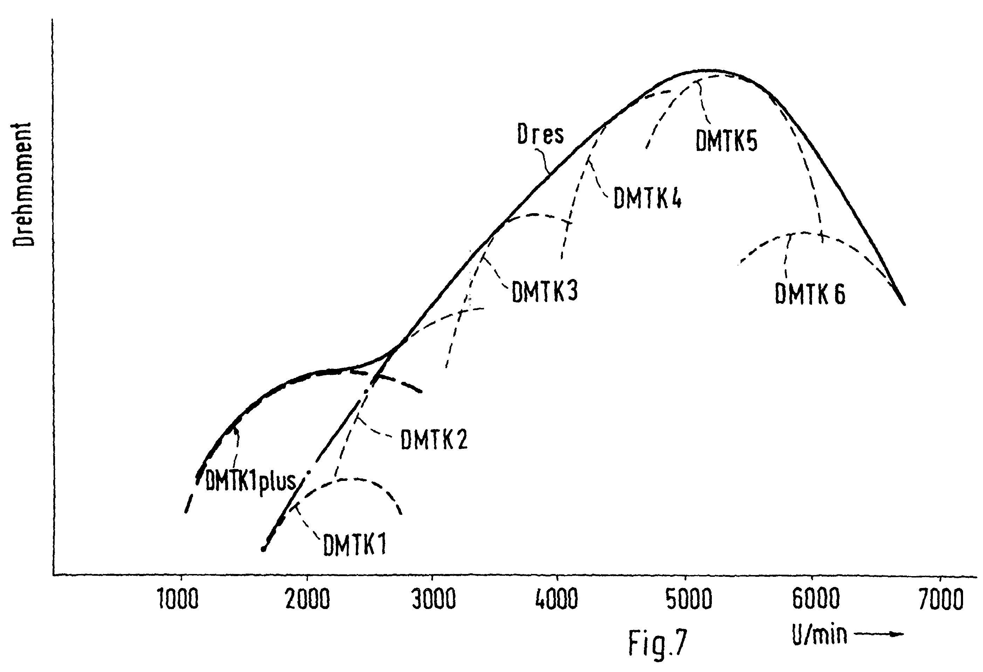

Dies geht aus dem Diagramm gemäß Fig. 7 hervor, bei dem auf der Ordinate das Drehmoment und auf der Abszisse die Drehzahl U/min aufgetragen sind. Aus diesen Drehmomentteilkurven ergibt sich eine resultierende Drehmomentkurve aus D res, die verdeutlicht, daß das Drehmomentverhalten der Brennkraftmaschine 1 dank der Steuereinrichtung 12 optimiert ist.

Eine weitere Verbesserung des Drehmomentverhaltens wird erreicht, wenn die Zuführungseinrichtung 45 die zwei getrennten Zuleitungen 46, 47 aufweist und die Sperrklappe 54 im niedrigen Drehzahlbereich geschlossen ist. In diesem Betriebszustand ergeben sich - bei geöffneter Drosselklappe 50 - Druckschwingungen in den Zuleitungen 46, 47, die lange Resonanzrohre bilden und zu der Drehmomentteilkurve DTMK 1plus führen. Bei weiterer Verstellung der Steuereinrichtung 12 in Richtung der zweiten Endstellung STE II ergeben sich die Drehmomentteilkurven DMTK 2 bis DMTK 6.

## Patentansprüche

1. Brennkraftmaschine mit gegenüberliegenden Zylinderreihen, enthaltend eine Sauganlage(10) mit einer Vorrichtung (11) zur Nutzung von Resonanzeffekten und einem Resonanzabehälter (13), der Begrenzungswandungen umfasst, welcher Resonanzbehälter einerseits mit der Atmosphäre und andererseits mit Zylindern der Brennkraftmaschine in Verbindung steht, wobei innerhalb des Resonanzbehälters (13) eine Vorrichtung (11) mit einer den Resonanzquerschnitt variierbaren Steuereinrichtung (12) vorgesehen ist, die zu Wandungen (16, 17, 18, 19) des Resonanzbehälters (13) beabstandete Leitwandungen (13, 14, 15) aufweist, **dadurch gekennzeichnet, dass** die Leitwandungen (13, 14, 15) durch zwei gleichgerichtete Schenkelwandungen (24, 25) und einer Stegwandung (26) gebildet werden, die einen U-förmigen Verlauf aufweisen und dass die Steuereinrichtung (12) zwischen einer ersten Endstellung (STE I) und einer zweiten Endstellung (STE II) verstellbar ist, wobei die Stegwandung (26) der Steuereinrichtung (12) zumindest in der ersten Endstellung (STE I) zusammen mit einer ersten Stirnwand (22) des Resonanzbehälters einen Verbindungskanal (27) zu den Zylinderreihen (2, 3) vorgelagerten Resonanzvolumina (28, 29) im Resonanzbehälter (13) bilden.

2. Brennkraftmaschine nach Anspruch 1, **dadurch gekennzeichnet, daß** der Resonanzbehälter (13) eine prismaaartige Grundform mit den Zylinderreihen (2, 3) zugekehrten Längswandungen (20, 21) und der ersten Stirnwandung (22) und einer zwewiten Stirnwandung (23) aufweist, wobei die Leitwandungen (13, 14, 15) der Steuereinrichtung (12) zu den Längswandungen (20, 21) und den Stirnwandungen (22, 23) gleichsinnig verlaufen.

3. Brennkraftmaschine nach einem oder mehreren der vorangehenden Ansprüche, **dadurch gekennzeichnet, daß** die Schenkelwandungen (24, 25) der Steuereinrichtung (12) von korrespondierenden Aufnahmen (36, 37) im Resonanzbehälter (13) umgeben sind.

4. Brennkraftmaschine nach Anspruch 3, **dadurch gekennzeichnet, daß** die Aufnahmen (36, 37) durch Verlängerungen (38, 39) des Resonanzbehälters (13) gebildet sind.

5. Brennkraftmaschine nach Anspruch 4, **dadurch gekennzeichnet, daß** die Verlängerungen (38, 39) eine rohrförmigen Querschnitt aufweisen.

6. Brennkraftmaschine nach den Ansprüchen 3 und 4, **dadurch gekennzeichnet, daß** zwischen den Schenkelwandungen (24, 25) und den Aufnahmen (36, 37) Führungseinrichtungen (38, 39) vorgesehen sind.

7. Brennkraftmaschine nach Anspruch 1, **dadurch gekennzeichnet, daß** die erste Stirnwandung (22) des Resonanzbehälters (13) mit einer einen Luftfilter (40) umfassenden Zuführungseinrichtung (41) versehen ist.

8. Brennkraftmaschine nach Anspruch 7, **dadurch gekennzeichnet, daß** die Zuführungseinrichturig (41) eine einzige Zuleitung (42) umfaßt, in der eine Drosselklappe (44) vorgesehen ist.

9. Brennkraftmaschine nach Anspruch 7, **dadurch gekennzeichnet, daß** die Zuführungseinrichtung (2) abschnittsweise getrennt verlaufende Zuleitungen (46, 47) aufweist, die in die erste Stirnwandung (22) des Resonanzbehälters (13) münden.

10. Brennkraftmaschine nach den Ansprüchen 7 bis 9, **dadurch gekennzeichnet, daß** die beiden Zuleitungen (46, 47) mit einem vorgeschalteten einzigen Rohrabschnitt (49) versehen sind, in dem eine Drosselklappe (50) angeordnet ist.

11. Brennkraftmaschine nach den Ansprüchen 1, 7 und 9, **dadurch gekennzeichnet, daß** in dem Verbnindungskanal (51) in einem zwischen den Zuleitungen (46, 47) verlaufenden Bereich (55) eine Sperrklappe (54) vorgesehen ist.

12. Brennkraftmaschine nach Anspruch 1, **dadurch gekennzeichnet, daß** die Steuereinrichtung (12) mittels einer Stelleinrichtung (56) betätigbar ist.

13. Brennkraftmaschine nach Anspruch 12, **dadurch gekennzeichnet, daß** die Stelleinrichtung (56) durch eine Hubstange (57) der Steuereinrichtung (12) und einem Elektromotor (58) gebildet wird, der benachbart der zweiten Stirnwand (23) am Resonanzbehälter (13) angeordnet ist.

14. Brennkraftmaschine nach Anspruch 13, **dadurch gekennzeichnet, daß** der Elektromotor (58) über ein Schneckengetriebe (59) mit der Hubstange (57) zusammenarbeitet.

15. Brennkraftmaschine nach einem oder mehreren der vorangehenden Ansprüche, **dadurch gekennzeichnet, daß** die Steuereinrichtung (12) zumindest in Abhängigkeit der Drehzahl der Brennkraftmaschine (1) verstellt wird.

16. Brennkraftmaschine nach einem oder mehreren der vorangehenden Ansprüche, **dadurch gekennzeichnet, daß** die Steuereinrichtung (12) in Abhängigkeit der Drehzahl und/oder der Last der Brennkraftmaschine (1) verstellt wird.

## Claims

1. An internal-combustion engine with opposing banks of cylinders, comprising an intake system (10) with a device (11) for utilising resonance effects, and a resonance chamber (13) having boundary walls and communicating on one side with the atmosphere and on the other side with cylinders of the internal-combustion engine, wherein a device (11) with a control means (12) for varying the resonance cross-section is provided inside the resonance chamber (13), the control means (12) having deflecting walls (13, 14, 15) spaced apart from walls (16, 17, 18, 19) of the resonance chamber (13), **characterised in that** the deflecting walls (13, 14, 15) are formed by two parallel side walls (24, 25) and a bridging wall (26) that extend in the shape of a U, and **in that** the control means (12) is adjustable between a first end position (STE I) and a second end position (STE II), wherein the bridging wall (26) of the control means (12), at least in the first end position (STE I), together with a first end wall (22) of the resonance chamber, forms a connecting channel (27) between resonance volumes (28, 29) provided in the resonance chamber (13) upstream of the cylinder banks (2, 3).

2. An internal-combustion engine according to claim 1, **characterised in that** the resonance chamber (13) has a prismatic basic shape comprising longitudinal walls (20, 21) facing the cylinder banks (2, 3), and the first end wall (22) and a second end wall (23), wherein the deflecting walls (13, 14, 15) of the control means (12) extend in the same direction as the longitudinal walls (20, 21) and the end walls (22, 23).

3. An internal-combustion engine according to one or more of the preceding claims, **characterised in that** the side walls (24, 25) of the control means (12) are surrounded by corresponding receivers (36, 37) in the resonance chamber (13).

4. An internal-combustion engine according to claim 3, **characterised in that** the receivers (36, 37) are formed by extensions (38, 39) of the resonance chamber (13).

5. An internal-combustion engine according to claim 4, **characterised in that** the extensions (38, 39) have a tubular cross-section.

6. An internal-combustion engine according to claims 3 and 4, **characterised in that** guide means (38, 39) are provided between the side walls (24, 25) and the receivers (36, 37).

7. An internal-combustion engine according to claim 1, **characterised in that** the first end wall (22) of the resonance chamber (13) is provided with a supply means (41) comprising an air filter (40).

8. An internal-combustion engine according to claim 7, **characterised in that** the supply means (41) comprises a single feed line (42) in which a throttle valve (44) is provided.

9. An internal-combustion engine according to claim 7, **characterised in that** the supply means (2 [sic]) has feed lines (46, 47) which in part extend separately and which lead into the first end wall (22) of the resonance chamber (13).

10. An internal-combustion engine according to claims 7 to 9, **characterised in that** the two feed lines (46, 47) are provided with a single pipe portion (49) which is arranged upstream and in which a throttle valve (50) is arranged.

11. An internal-combustion engine according to claims 1, 7 and 9, **characterised in that** a shut-off valve (54) is provided in the connecting channel (51) in a region (55) extending between the feed lines (46, 47).

12. An internal-combustion engine according to claim 1, **characterised in that** the control means (12) is actuatable by an adjusting means (56).

13. An internal-combustion engine according to claim 12, **characterised in that** the adjusting means (56) is formed by a lifting rod (57) of the control means (12) and an electric motor (58) arranged adjacent to the second end wall (23) on the resonance chamber (13).

14. An internal-combustion engine according to claim 13, **characterised in that** the electric motor (58) co-operates with the lifting rod (57) via a worm gear (59).

15. An internal-combustion engine according to one or more of the preceding claims, **characterised in that** the control means (12) is adjusted at least as a function of the speed of the internal-combustion engine (1).

16. An internal-combustion engine according to one or more of the preceding claims, **characterised in that** the control means (12) is adjusted as a function of the speed and/or the load on the internal-combustion engine (1).

## Revendications

1. Moteur à combustion interne avec des lignes de cylindres opposées, contenant un système d'admission (10) avec un dispositif (11) pour utiliser les effets de résonance et un récipient de résonance (13) qui comprend des parois de délimitation, lequel récipient de résonance est en liaison d'une part avec l'atmosphère et d'autre part avec des cylindres du moteur à combustion interne, à l'intérieur du récipient de résonance (13) étant prévu un dispositif (11) avec un dispositif de commande (12) pouvant faire varier la section de résonance, lequel comporte des parois de guidage (13, 14, 15) espacées des parois (16, 17, 18, 19) du récipient de résonance (13), **caractérisé en ce que** les parois de guidage (13, 14, 15) sont formées par deux parois de côté (24, 25) dirigées dans le même sens et d'une paroi transversale (26) qui présentent une allure en U, et **en ce que** le dispositif de commande (12) est réglable entre une première position de fin de course STE I et une deuxième position de fin de course STE II, la paroi transversale (26) du dispositif de commande (12) formant, au moins dans la première position de fin de course STE I, avec une première paroi frontale (22) du récipient de résonance, un canal de liaison (27) avec des volumes de résonance (28, 29) dans le récipient de résonance (13), situés devant les lignes de cylindres (2, 3).

2. Moteur à combustion interne selon la revendication 1, **caractérisé en ce que** le récipient de résonance (13) présente une forme de base prismatique avec des parois longitudinales (20, 21) tournées vers les lignes de cylindres (2, 3) et la première paroi frontale (22) et une deuxième paroi frontale (23), les parois de guidage (13, 14, 15) du dispositif de commande (12) s'étendant dans le même sens que les parois longitudinales (20, 21) et les parois frontales (22, 23).

3. Moteur à combustion interne selon une ou plusieurs des revendications précédentes, **caractérisé en ce que** les parois de côté (24, 25) du dispositif de commande (12) sont entourées par des logements (36, 37) correspondants dans le récipient de résonance (13).

4. Moteur à combustion interne selon la revendication 3, **caractérisé en ce que** les logements (36, 37) sont formés par des prolongements (38, 39) du récipient de résonance (13).

5. Moteur à combustion interne selon la revendication 4, **caractérisé en ce que** les prolongements (38, 39) présentent une section transversale de forme tubulaire.

6. Moteur à combustion interne selon les revendications 3 et 4, **caractérisé en ce que** des dispositifs de guidage (38, 39) sont prévus entre les parois de côté (24, 25) et les logements (36, 37).

7. Moteur à combustion interne selon la revendication 1, **caractérisé en ce que** la première paroi frontale (22) du récipient de résonance (13) est pourvue d'un dispositif d'amenée (41) comprenant un filtre à air (40).

8. Moteur à combustion interne selon la revendication 7, **caractérisé en ce que** le dispositif d'amenée (41) comprend une seule conduite d'arrivée (42) dans laquelle est prévu un clapet d'étranglement (44).

9. Moteur à combustion interne selon la revendication 7, **caractérisé en ce que** le dispositif d'amenée (2) comporte des conduites d'arrivée (46, 47) s'étendant séparément par endroits, qui débouchent dans la première paroi frontale (22) du récipient de résonance (13).

10. Moteur à combustion interne selon les revendications 7 à 9, **caractérisé en ce que** les deux conduites d'arrivée (46, 47) sont pourvues d'un seul tronçon de tube (49) situé en amont, dans lequel est disposé un clapet d'étranglement (50).

11. Moteur à combustion interne selon les revendications 1, 7 et 9, **caractérisé en ce qu'**un clapet d'arrêt (54) est prévu dans le canal de liaison (51), dans une zone (55) s'étendant entre les conduites d'arrivée (46, 47).

12. Moteur à combustion interne selon la revendication 1, **caractérisé en ce que** le dispositif de commande (12) peut être actionné au moyen d'un dispositif de réglage (56).

13. Moteur à combustion interne selon la revendication 12, **caractérisé en ce que** le dispositif de réglage (56) est formé par une tige mobile (57) du dispositif de commande (12) et un moteur électrique (58) qui est disposé au voisinage de la deuxième paroi frontale (23) sur le récipient de résonance (13).

14. Moteur à combustion interne selon la revendication 13, **caractérisé en ce que** le moteur électrique (58) coopère avec la tige mobile (57) par un engrenage à vis sans fin (59).

15. Moteur à combustion interne selon une ou plusieurs des revendications précédentes, **caractérisé en ce que** le dispositif de commande (12) est réglé au moins en fonction de la vitesse de rotation du moteur à combustion interne (1).

16. Moteur à combustion interne selon une ou plusieurs des revendications précédentes, **caractérisé en ce que** le dispositif de commande (12) est réglé en fonction de la vitesse de rotation et/ou de la charge du moteur à combustion interne (1).
